# EUROPEAN PATENT APPLICATION

(11) **EP 4 593 177 A1**
(43) Date of publication of application: **30.07.2025**
(21) Application number: 23867438.6
(22) Date of filing: 18.09.2023
(51) Int. Cl.: H01M 50/258, H01M 10/04

(54) **BATTERY MODULE ASSEMBLING METHOD**

(30) Priority: 19.09.2022 CN 202211139039
(71) Applicant: Autoflight (Kunshan) Co., Ltd., Suzhou, Jiangsu 215345 (CN)
(72) Inventor: TIAN, Yu, Suzhou, Jiangsu 215345 (CN); WANG, Binbin, Suzhou, Jiangsu 215345 (CN)
(74) Representative: MERH-IP Matias Erny Reichl Hoffmann Patentanwälte PartG mbB
(86) International application number: PCT/CN2023/119325
(87) International publication number: WO 2024/061149

(57) **Abstract**

A battery module assembly method to assemble a module unit (100) and a module housing (200) using an assembly jig, the assembly jig comprises: a support platform (1), the support platform (1) is used to support each module unit (100) of the battery module and is provided with a plurality of module unit positioning parts (10); an assembly base plate (2) is connected to the lower side of the support platform (1), the assembly base plate (2) is used to install the support platform (1) and is provided with a plurality of module housing positioning parts (20), the battery module assembly method comprising: step S1: positioning each module unit (100) on the support platform (1) using the module unit positioning parts (10); step S2: installing a soft copper plate (300) between each module unit (100) to achieve electrical connection between each module unit (100); step S3: placing the module housing (200) abutted against each module housing positioning part (20) so that the module housing (200) is sleeved on the outside the module unit (100); step S4: fixedly connecting the module unit (100) to the module housing (200).

## Description

### CROSS REFERENCE

The present application claims the priority of the following Chinese patent application: 2022, September 19, application number: 202211139039.2, entitled "A battery module assembly method". The entirety of the above application is incorporated herein by reference.

### FIELD OF THE DISCLOSURE

The invention relates to the technical field of power batteries, in particular to a battery module assembly method.

### BACKGROUND OF THE INVENTION

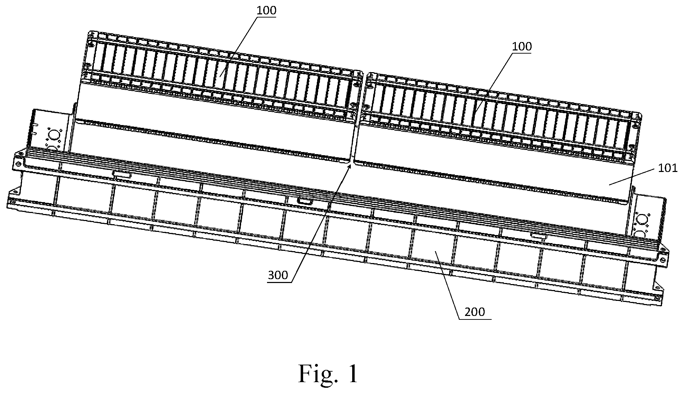

The battery installed in an aircraft arm (aircraft, such as an electric vertical take-off and landing aircraft) is different from an electric vehicle battery, during the design process, its size is more compact than that of an electric vehicle battery. As shown in Figure 1, if two module units 100 need to be installed in a module housing 200, the installation is very difficult due to the very compact space. Therefore, the soft copper plate 300 for electrical connection between the module units 100 must be installed before the module units 100 are placed in the module housing, otherwise there will be no installation space after the module units 100 are placed in the module housing. The two module units 100 after the soft copper plate 300 is pre-installed cannot be placed into the module housing using the traditional battery hoisting method because the soft copper plate 300 is not strong enough to support the weight of the module unit 100.

### SUMMARY OF THE INVENTION

The purpose of the invention is to provide a battery module assembly method. The battery module assembly method of the present invention replaces the traditional battery hoisting method, solving the problem of difficult installation of soft copper plates between battery module units and the problem of damage to soft copper plates due to improper installation.

For this purpose, the present invention provides a battery module assembly method to assemble module units and a module housing using an assembly jig, and the assembly jig comprises: a support platform, the support platform is used to support each module unit of the battery module and is provided with a plurality of module unit positioning parts; an assembly base plate is connected to the lower side of the support platform, the assembly base plate is used to install the support platform and is provided with a plurality of module housing positioning parts, the battery module assembly method comprising: Step S1: positioning each module unit on the support platform using the module unit positioning parts; Step S2: installing a soft copper plate between each module unit to achieve electrical connection between each module unit; Step S3: placing the module housing abutted against each module housing positioning part so that the module housing is sleeved on the outside the module unit; Step S4: fixedly connecting the module unit to the module housing.

Preferably, the assembly base plate is detachably provided with a plurality of module side positioning parts arranged one by one opposite to each module unit, the Step S1 specifically comprising: positioning each module unit on the support platform using the module unit positioning part and the module side positioning parts; the Step S3 specifically comprising: removing the module side positioning parts and placing the module housing abutted against each module housing positioning part so that the module housing is sleeved on the outside of the module unit.

Preferably, the module housing positioning part comprises an abutting surface and a mounting surface, wherein the mounting surface is used to mount the module housing positioning part on the assembly base plate, and the Step S3 specifically comprising: placing the side edge of the module housing abutted against the abutting surface of each module housing positioning part so that the module housing is sleeved on the outside of the module unit.

Preferably, the assembly base plate is provided with a plurality of through holes, and each through hole is correspondingly arranged opposite to the fixing hole of the module unit and the module housing; the Step S4 specifically comprising: connecting the module unit and the module housing with a plurality of screw bolts into the corresponding fixing hole passing through the through hole.

Preferably, after Step S4, the method further comprising: Step S5: providing a bottom plate, and welding the bottom plate to the module housing to encapsulate the battery module.

Preferably, the module unit positioning part protrudes from the support platform and limits the movement of the module unit in a length direction thereof.

Preferably, the module unit positioning parts are arranged along a length direction of the support platform.

Preferably, the support platform is detachably connected to the assembly base plate.

Preferably, the height of the module side positioning part is higher than that of the support platform.

Preferably, the support platform comprises a plurality of support blocks arranged at equal heights and at intervals.

The battery module assembly method of the present invention replaces the traditional battery hoisting method, and solves the problem of difficult installation of soft copper plates between module units and the problem of damage to the soft copper plates due to improper installation.

### BRIEF DESCRIPTION OF DRAWINGS

FIG. 1 is a schematic diagram of an assembly of a battery module according to the prior art;
FIG. 2 is a flow diagram of a battery module assembly method according to an embodiment of the present invention;
FIG. 3 is a schematic diagram of an assembly jig according to an embodiment of the present invention;
FIG. 4 is a partial enlarged view of position A in FIG. 3;
FIG. 5 is a schematic diagram of an assembly of a battery module using the battery module assembly method according to an embodiment of the present invention;
FIG. 6 is a bottom view showing a battery module assembled using the battery module assembly method according to an embodiment of the present invention;
FIG. 7 is another flow diagram showing a battery module assembly method according to an embodiment of the present invention.

### DETAILED DESCRIPTION

The technical solutions of the invention will be clearly and completely described below in conjunction with the accompanying drawings. Apparently, the described embodiments are part of the embodiments of the invention, but not all of them. Based on the embodiments of the present invention, all other embodiments obtained by persons of ordinary skill in the art without making creative efforts belong to the scope of protection of the present invention.

Unless the context requires otherwise, throughout the specification and claims, the word "comprise" and variations such as "include" and "have" should be construed in an open, inclusive sense, ie, should be interpreted as "including, but not limited to."

The following will be combined with the accompanying drawings to describe the various embodiments of the present invention in detail, so as to more clearly understand the purpose, characteristics and advantages of the present invention. It should be understood that the embodiments shown in the accompanying drawings are not intended to limit the scope of the present invention, but are only intended to illustrate the essential spirit of the technical solution of the present invention.

References throughout the specification to "one embodiment" or "an embodiment" mean that a particular feature, structure, or characteristic described in connection with the embodiment is included in at least one embodiment. Thus, the appearance of "in one embodiment" or "in an embodiment" in various places throughout the specification are not necessarily all referring to the same embodiment. In addition, the particular features, structures, or characteristics may be combined in any manner in one or more embodiments.

As used in this specification and the appended claims, the singular forms "a," "an," and "the" include plural referents unless the context clearly dictates otherwise. It should be noted that the term "or" is generally employed in its sense including "and/or" unless the context clearly dictates otherwise.

In the following description, in order to clearly demonstrate the structure and working mode of the utility model, many directional words will be used for description, but the words "front", "back", "left", "right", "outside", "inside", "outward", "inward", "up", "down", etc. should be understood as convenient terms and should not be understood as restrictive terms.

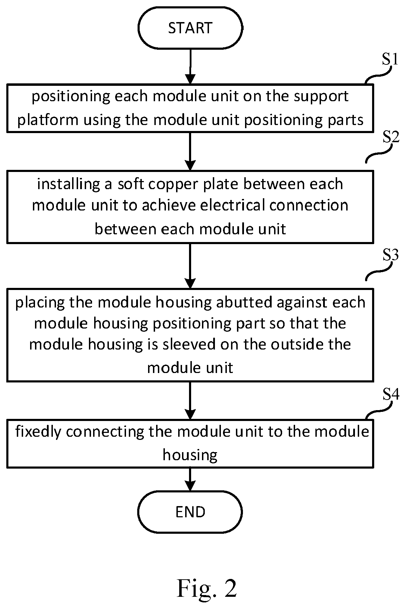

Embodiments of the present invention are described below with reference to the accompanying drawings. As shown in FIG. 2 , a battery module assembly method of the present invention comprises:

Step S1: positioning each module unit on the support platform using the module unit positioning parts.

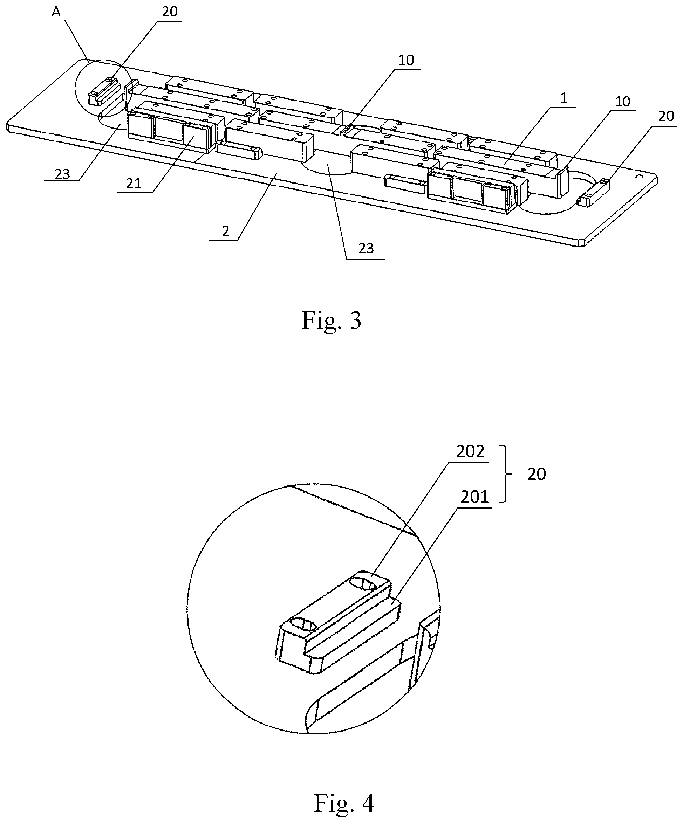

Specifically, an assembly jig in the embodiment of the present invention is used to assemble module units 100 and a module housing 200. As shown in FIG. 3, the assembly jig comprises a support platform 1 and an assembly base plate 2. The support platform 1 is used to support each module unit 100 of the battery module. The support platform 1 is provided with a plurality of module unit positioning parts 10 to limit each module unit 100. Specifically, the module unit positioning parts 10 protrude from the support platform 1, and the module unit positioning parts 10 are arranged along a length direction and a width direction of the support platform 1 to limit the movement of each module unit 100 in its length direction and its width direction.

In some embodiments, the module unit positioning parts 10 are arranged only along the length direction of the support platform 1 to limit the movement of each module unit 100 in the length direction. In those embodiment, a plurality of module side positioning parts 21 are detachably provided on the assembly base plate 2. The height of the module side positioning parts 21 is higher than that of the support platform 1. Each module side positioning part 21 is correspondingly arranged opposite to each module unit 100. The module side positioning parts 21 limit the movement of each module unit 100 in the width direction of the assembly base plate 2, and also limit the movement of the module unit 100 in the width direction of the support platform 1.

Step S2: installing a soft copper plate between each module unit to achieve electrical connection between each module unit.

Specifically, the module units 100 are required to be electrically connected through a soft copper plate 300. In the embodiment, as shown in FIG. 1, the soft copper plate 300 can be respectively connected to the back side of the module unit side plate 101 of each module unit 100 to prevent the impact of soft copper plate 300 from contacting with the outside.

Step S3: placing the module housing abutted against each module housing positioning part so that the module housing is sleeved on the outside the module unit.

Specifically, as shown in FIG. 3, the lower side of the support platform 1 is connected to the assembly base plate 2, which is used to install the support platform 1. The assembly base plate 2 is provided with a plurality of module housing positioning parts 20, which are arranged around the support platform 1 to position and limit the module housing 200 of the battery module, so that the module housing 200 is accurately sleeved on the outside of the module unit 100. Further, the module housing positioning part 20 comprises an abutting surface 201 and a mounting surface 202, the abutting surface 201 is used to support the module housing 200, and the mounting surface 202 is used to install the module housing positioning part 20 on the assembly base plate 2. The difference of height between the abutting surface 201 and the support platform 1 is used to limit the depth of the module units 100 entering the module housing 200. Further, the support platform 1 is detachably connected to the assembly base plate 2, which is convenient for replacing the support platform 1. The support platform 1 can be arranged by a plurality of support blocks of the same height, which is convenient for expansion or replacement of module units 100 of different sizes.

In some embodiments, the module unit positioning parts 10 are only arranged along the length direction of the support platform 1, and a plurality of module side positioning portions 21 are detachably provided on the assembly base plate 2. Before the module housing 200 is abutted against each module housing positioning portion 20, the module side positioning portion 21 needs to be removed first to avoid interference between the module housing 200 and the module side positioning portion 21.

Step S4: fixedly connecting the module unit to the module housing.

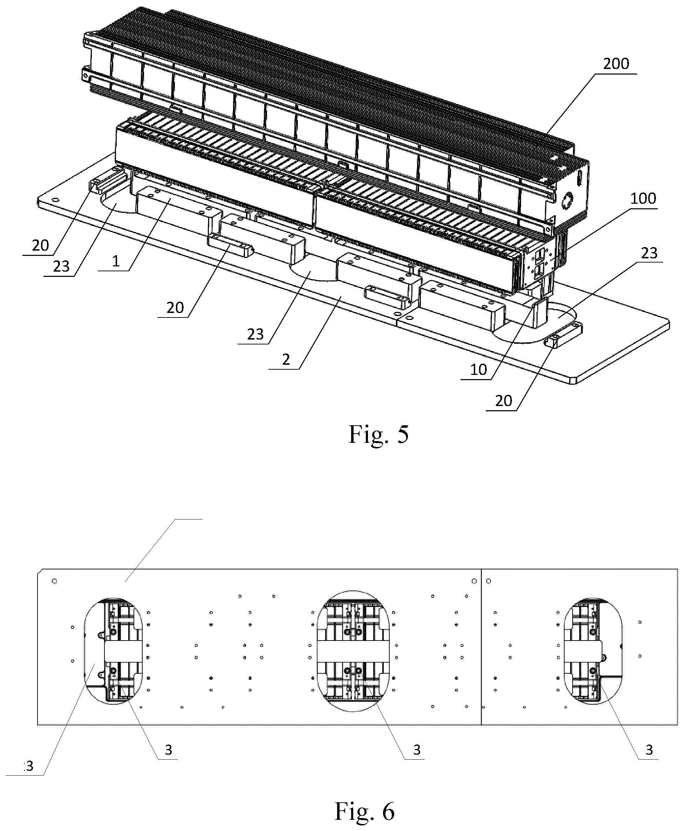

Specifically, as shown in FIG. 5 and FIG. 6, a plurality of through holes 23 are provided on the assembly base plate 2, and each through hole 23 is correspondingly arranged opposite to a fixing hole 3 of the module unit 100 and the module housing 200. The module unit 100 and the module housing 200 can be connected by passing screw bolts through the fixing hole 3. After all the screw bolts are tightened, the entire product can be firmly assembled, and subsequent lifting and transportation can be carried out.

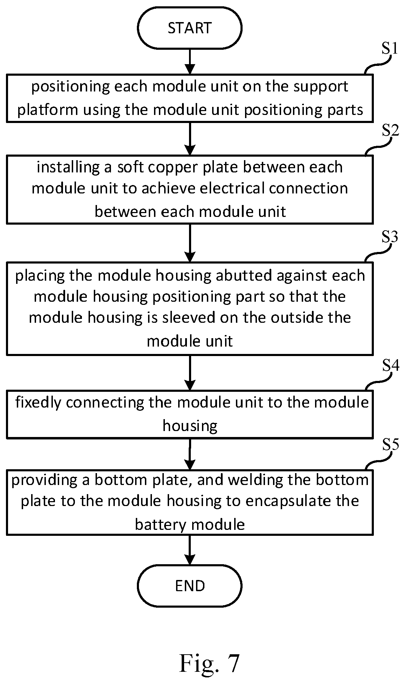

Further, as shown in FIG. 7, after Step S4, the method may further include: Step S5: providing a bottom plate, welding the bottom plate to the module housing 200 to encapsulate the battery module.

The battery module assembly method of the present invention replaces the traditional battery hoisting method, and the method that first positioning the module units and then reversely installing the module housing replaces the method that first positioning the module housing and then installing the module units upright, thereby changing the assembly sequence. It can be used in situations where the installation space is small and lifting is impossible, and solves the problem of difficult installation of soft copper plates between module units and the problem of damage to the soft copper plates due to improper installation.

The above embodiments are merely illustrative of the principles of the present invention and its effects, which is not intended to limit the invention. Any person skilled in the art can modify or alter the above embodiments without departing from the purpose and the scope of the present invention. Accordingly, all equivalent modifications or alterations made by persons having ordinary knowledge in the art, without departing from the purpose and technical ideas disclosed in the present invention, shall still be covered by the claims of the present invention.

## Claims

1. A battery module assembly method to assemble a module unit (100) and a module housing (200) using an assembly jig, the assembly jig comprises: a support platform (1), the support platform (1) is used to support each module unit (100) of a battery module and is provided with a plurality of module unit positioning parts (10); an assembly base plate (2) is connected to the lower side of the support platform (1), the assembly base plate (2) is used to install the support platform (1) and is provided with a plurality of module housing positioning parts (20), the battery module assembly method comprising:
Step S1: positioning each module unit (100) on the support platform (1) using the module unit positioning parts (10);
Step S2: installing a soft copper plate (300) between each module unit (100) to achieve electrical connection between each module unit (100);
Step S3: placing the module housing (200) abutted against each module housing positioning part (20) so that the module housing (200) is sleeved on the outside the module unit (100);
Step S4: fixedly connecting the module unit (100) to the module housing (200).

2. The battery module assembly method according to claim 1, wherein the assembly base plate (2) is detachably provided with a plurality of module side positioning parts (21) arranged one by one opposite to each module unit (100),
the Step S1 specifically comprising:
positioning each module unit (100) on the support platform (1) using the module unit positioning part (10) and the module side positioning parts (21);
the Step S3 specifically comprising:
removing the module side positioning parts (21) and placing the module housing (200) abutted against each module housing positioning part (20) so that the module housing (200) is sleeved on the outside of the module unit (100).

3. The battery module assembly method according to claim 1, wherein the module housing positioning part (20) comprises an abutting surface (201) and a mounting surface (202), wherein the mounting surface (202) is used to mount the module housing positioning part (20) on the assembly base plate (2), and the Step S3 specifically comprising:
placing the side edge of the module housing (200) abutted against the abutting surface (201) of each module housing positioning part (20) so that the module housing (200) is sleeved on the outside of the module unit (100).

4. The battery module assembly method according to claim 3, wherein the assembly base plate (2) is provided with a plurality of through holes (23), and each through hole (23) is correspondingly arranged opposite to a fixing hole (3) of the module unit (100) and the module housing (200); the Step S4 specifically comprising:
connecting the module unit (100) and the module housing (200) with a plurality of screw bolts into the corresponding fixing hole (3) passing through the through hole (23).

5. The battery module assembly method according to claim 1, after Step S4, the method further comprising:
Step S5: providing a bottom plate, and welding the bottom plate to the module housing (200) to encapsulate the battery module.

6. The battery module assembly method according to claim 1, wherein the module unit positioning part (10) protrudes from the support platform (1) and limits the movement of the module unit (100) in a length direction thereof.

7. The battery module assembly method according to claim 6, wherein the module unit positioning parts (10) are arranged along the length direction of the support platform (1).

8. The battery module assembly method according to claim 1, wherein the support platform (1) is detachably connected to the assembly base plate (2).

9. The battery module assembly method according to claim 5, wherein a height of the module side positioning part (21) is higher than that of the support platform (1).

10. The battery module assembly method according to claim 5, wherein the support platform (1) comprises a plurality of support blocks arranged at equal heights and at intervals.
